# FASCICULE DE BREVET EUROPEEN

(11) **EP 3 228 115 B1**
(45) Date de publication et mention de la délivrance du brevet: **08.04.2020**
(21) Numéro de dépôt: 15808752.8
(22) Date de dépôt: 26.11.2015
(51) Int. Cl.: H04W 24/04, H04W 88/04, H04W 84/22

(54) **TECHNIQUE D'ACCÈS À AU MOINS UN SERVEUR D'ADMINISTRATION**
TECHNIK ZUM ZUGRIFF AUF MINDESTENS EINEN VERWALTUNGSSERVER
TECHNIQUE FOR ACCESSING AT LEAST ONE ADMINSTRATION SERVER

(30) Priorité: 04.12.2014 FR 1461931
(43) Date de publication de la demande: 11.10.2017
(73) Titulaire: Orange, 75015 Paris (FR)
(72) Inventeur: ROULAND, Julien, 38400 Saint Martin d'Heres (FR); OULAHAL, Nordine, 38100 Grenoble (FR); DOUET, Marc, 38340 Voreppe (FR)
(86) Numéro de dépôt international: PCT/FR2015/053234
(87) Numéro de publication internationale: WO 2016/087751

(56) Documents cités:
- US-A1- 2013 151 893
- US-B1- 7 522 904
- ANONYMOUS ED - ANONYMOUS: "Information technology- Telecommunications and information exchange between systems- Local and metropolitan area networks- Specific requirements- Part 11: Wireless LAN Medium Access Control (MAC) and Physical Layer (PHY) Specifications", 1 janvier 2003 (2003-01-01), IEEE STANDARD; [IEEE STANDARD], IEEE, PISCATAWAY, NJ, USA, PAGE(S) I - 513, XP017600949, sections 5.4.2.2, 11.1.3

## Description

L'invention se rapporte au domaine général des télécommunications.

L'invention concerne plus particulièrement l'accès par un dispositif à au moins un serveur d'administration connecté à un réseau de communication étendu lorsqu'une panne affectant un accès au réseau de communication étendu se produit.

Afin de garantir des services de qualité, il est préférable qu'un opérateur de réseau puisse administrer à distance des dispositifs.

L'administration à distance des dispositifs nécessite notamment :
- de détecter et de connaitre les dispositifs administrés, par exemple leurs numéros de série, leurs versions matérielle et logicielle ;
- de superviser ces dispositifs, par exemple en obtenant des informations de supervision et des indicateurs de performance.

Dans un réseau local, une passerelle d'accès permet notamment à des dispositifs localisés dans un site client d'accéder à un réseau de communication étendu WAN (pour « Wide Area Network »), tel que le réseau Internet. Ces dispositifs sont également appelés CPE, pour « Customer Premise Equipment ». Pour un réseau local, il s'agit notamment de la passerelle d'accès, d'un décodeur TV « Set-Top-Box », d'un terminal mobile. Dans le contexte d'un réseau domotique, il s'agit également d'équipements d'électroménager, de systèmes d'alarme, de capteurs.

La gestion à distance des dispositifs d'un réseau local s'appuie par exemple sur un rapport technique élaboré par le Broadband Forum, TR-069 « CPE WAN Management Protocol ». Ce rapport technique définit un protocole CWMP, permettant la communication entre un serveur d'administration, appelé serveur d'auto-configuration distant ACS (pour « Auto-configuration Server »), et un dispositif du réseau local. Le protocole CWMP définit un mécanisme qui permet notamment une auto-configuration sécurisée des dispositifs du réseau local et d'autres fonctions de gestion de ces dispositifs.

Il est notamment possible à l'opérateur du réseau d'effectuer des interventions à distance, telles que :
- mettre à jour le logiciel (« software ») ou le microcode (« firmware ») d'un dispositif, lorsqu'une évolution de la version logicielle ou du microcode est requise ;
- effectuer un diagnostic lorsqu'un dispositif présente un disfonctionnement ;
- installer et configurer dynamiquement de nouveaux services ;
- superviser l'état et les performances d'un dispositif.

Le protocole CWMP s'appuie sur le protocole Internet, plus précisément sur TCP/IP (pour « Transmission Control Protocol »). Les données permettant l'administration à distance des dispositifs du réseau, par exemple des données d'aide au diagnostic, sont transmises par chaque dispositif au serveur d'administration au moyen du protocole CWMP. Lorsque l'accès au réseau de communication étendu WAN n'est plus possible par l'intermédiaire de la passerelle d'accès, il est alors impossible de contacter le serveur d'administration pour lui transmettre des données d'administration, par exemple d'aide au diagnostic. Par conséquent, il est impossible pour un conseiller support client de l'opérateur de récupérer automatiquement les données d'administration lorsque la passerelle d'accès ne permet plus un accès au réseau de communication étendu. Le conseiller doit alors interroger oralement le client pour pouvoir établir un diagnostic technique, ce qui rend ce travail difficile et peu fiable. Le conseiller est également dans l'impossibilité d'effectuer des actions d'administration à distance. Cette situation entraîne un mécontentement de l'utilisateur du réseau local vis-à-vis de son opérateur de réseau.

Des difficultés d'accès identiques se posent pour tout type de dispositif administré à distance, dès lors que ce dispositif n'a pas accès au réseau de communication étendu.

Le document brevet US7522904B1 décrit un procédé permettant à un point d'accès permettant un accès à un réseau de communication étendu de communiquer avec un serveur d'administration par l'intermédiaire d'un dispositif avec lequel il a établi une liaison sans fil.

Le document US2013/0151893 A1 décrit un système pour le diagnostic, le rétablissement et le reporting d'un dispositif CPE. Dans ce système, un dispositif CPE communique avec un sous-système de support technique par l'intermédiaire du réseau de communication étendu. Ce dispositif CPE sert alors d'intermédiaire entre le sous-système et d'autres dispositifs CPE au moyen d'un réseau local.

Un des buts de l'invention est de remédier à des insuffisances/inconvénients de l'état de la technique et/ou d'y apporter des améliorations. En particulier, un tel but est celui de permettre à un dispositif administré par un serveur d'administration et localisé dans un réseau local d'échanger des données d'administration avec le serveur en cas de panne de son lien d'accès principal avec le serveur d'administration, de manière simple et rapide.

L'invention réside dans une solution définie par les revendications.

Selon un premier aspect, l'invention a pour objet un procédé d'accès à au moins un serveur d'administration connecté à un réseau de communication étendu, tel que définit à la revendication 1.

Un point d'accès peut aussi bien être une passerelle d'accès permettant à des dispositifs d'un réseau local d'accéder au réseau de communication étendu qu'un dispositif offrant une fonction de point d'accès, tel qu'un terminal mobile disposant d'un accès radio au réseau de communication étendu.

Une panne affectant un accès au réseau de communication étendu correspond par exemple, pour un dispositif d'un réseau local, à une panne d'un élément matériel d'un point d'accès contribuant à cet accès ou à une panne associée à la connexion d'un point d'accès au réseau d'accès.

Grâce au procédé, un réseau sans fil dédié à un échange de données d'administration est ainsi créé par les différents points d'accès administrés par un même opérateur de réseau. Lorsque le réseau d'administration est détecté par le point d'accès considéré, il existe déjà un point d'accès dit point d'accès principal, dont la portée radio couvre le point d'accès considéré, permettant d'accéder au réseau de communication étendu pour échanger des données d'administration. Le point d'accès considéré est alors configuré en mode répéteur et est un point d'accès secondaire.

Lorsqu'une panne affectant un accès au réseau de communication étendu par l'intermédiaire du point d'accès secondaire survient, une ou des données d'administration, par exemple une donnée d'aide au diagnostic, peuvent être transférées grâce au réseau sans fil d'administration à un serveur d'administration et en retour des instructions d'administration visant une remise en état de fonctionnement peuvent être reçues. Ceci permet au serveur d'administration d'obtenir une visibilité sur le type de panne affectant l'accès au réseau de communication étendu et de déclencher le cas échéant des actions correctives. Actuellement, un utilisateur du réseau local doit contacter un conseiller du service après-vente pour lui signaler la panne. L'utilisateur n'est généralement pas capable de fournir des informations détaillées sur le type de panne. Par la mise en œuvre du procédé d'accès, un certain nombre de pannes peut être résolu directement à partir du serveur d'administration sans intervention de l'utilisateur. Le serveur d'administration peut déclencher des actions correctives adaptées à la panne en cours, ne nécessitant pas des actions de la part de l'utilisateur. Le parcours utilisateur est simplifié et la durée de la panne peut être diminuée dans une majorité de cas de panne. Ceci permet également au serveur d'administration de détecter une panne dans le réseau d'accès, cette panne affectant une pluralité de passerelles d'accès. Ce réseau d'administration de secours apporte ainsi une valeur ajoutée à l'opérateur du réseau, en étendant ses capacités d'administration et de diagnostic, afin d'offrir une meilleure expérience client.

Ce réseau d'administration est utilisé uniquement en cas de perte de l'accès au réseau de communication étendu. Par exemple, l'administration du dispositif du réseau local continue à être réalisée par l'intermédiaire du point d'accès nominal, en l'absence de panne. Ainsi, la plupart du temps, le réseau sans fil d'administration, dit réseau d'administration de secours, ne transporte pas de données d'administration.

Dans un mode de réalisation particulier, le réseau d'administration de secours est caché, c'est-à-dire que l'identifiant de ce réseau n'est pas diffusé. Seuls les dispositifs gérés par l'opérateur du réseau disposent des informations permettant d'y accéder.

Il est ici souligné que la mise en œuvre du procédé ne nécessite pas d'ajout d'équipement dans le réseau mais s'appuie au contraire sur une infrastructure de réseaux locaux. La solution proposée est ainsi très simple à mettre en place.

Dans un mode de réalisation particulier, le réseau sans fil d'administration est uniquement destiné à un échange de données d'administration lorsqu'une panne affectant l'accès au réseau de communication étendu est survenue.

Les différents modes ou caractéristiques de réalisation mentionnés ci-après peuvent être ajoutés indépendamment ou en combinaison les uns avec les autres, aux étapes du procédé d'accès tel que défini précédemment.

Dans un mode de réalisation particulier, le procédé d'accès comprend en outre, lorsque le réseau sans fil d'administration n'est pas détecté et en l'absence de panne affectant un accès au réseau de communication étendu, une activation par le point d'accès du réseau d'administration permettant un accès direct audit serveur d'administration.

Dans ce mode de réalisation, un point d'accès principal disposant d'un accès au réseau de communication étendu en état de fonctionnement crée le réseau sans fil dédié à l'administration en mode principal et assure, en l'absence de panne affectant son accès au réseau de communication étendu, l'accès au serveur d'administration pour des données d'administration. Ce point d'accès principal joue un rôle de passerelle d'accès pour un ou plusieurs dispositifs d'un réseau local principal. Un point d'accès secondaire maintient une connexion avec le point d'accès principal, directement ou par l'intermédiaire d'un ou de plusieurs autres points d'accès, et crée localement le réseau sans fil dédié à l'administration en mode répéteur. Ainsi un réseau de communication dédié à l'administration est créé de manière maillée.

Par rebonds successifs, un dispositif ne disposant pas de son accès nominal au réseau de communication étendu en raison d'une panne, peut accéder à un point d'accès principal permettant un accès vers le serveur d'administration.

Un dispositif d'un réseau local autre que le réseau principal ou bien géré par l'opérateur de réseau, peut ainsi être administré par l'intermédiaire du point d'accès principal lorsqu'une panne affectant l'accès au réseau de communication étendu survient.

Selon une caractéristique particulière, le procédé d'accès comprend en outre une détection d'une déconnexion du réseau sans fil d'administration, et en l'absence de panne affectant un accès au réseau de communication étendu, une activation par le point d'accès du réseau sans fil d'administration permettant un accès direct audit serveur d'administration.

On rappelle ici que, dans ce mode de réalisation, suite à la détection du réseau d'administration, le point d'accès s'y est connecté et a activé le réseau d'administration en mode répéteur. Lorsque le réseau d'administration n'est plus détecté, le point d'accès ne peut plus avoir de connexion au serveur d'administration par l'intermédiaire d'un point d'accès principal. S'il dispose d'un accès au réseau de communication étendu en état de fonctionnement, il active alors le réseau d'administration en mode principal et devient alors lui-même un point d'accès principal, afin de créer une zone locale d'accès au réseau de communication étendu pour l'administration de secours.

Selon une caractéristique particulière, un dispositif administré par le serveur d'administration se connecte au réseau sans fil d'administration lorsqu'il le détecte.

Dans un mode de réalisation particulier, une recherche du réseau sans fil d'administration est déclenchée suite à une détection d'une panne affectant l'accès au réseau de communication étendu.

Par défaut, le point d'accès ouvre le réseau d'administration en mode principal. Lorsqu'une panne affectant l'accès au réseau de communication étendu est détectée, le point d'accès recherche alors le réseau d'administration de secours afin de pouvoir échanger des données d'administration avec le serveur d'administration. Il sert également de relais pour d'autres dispositifs en devenant un répéteur du réseau d'administration. Ce mode de fonctionnement présente comme avantage d'être plus simple pour l'acheminement des données d'administration.

Selon une caractéristique particulière, un dispositif administré par le serveur d'administration se connecte au réseau sans fil d'administration lorsqu'il détecte une absence d'accès au réseau de communication étendu.

Selon un deuxième aspect, l'invention concerne également un point d'accès à un réseau de communication étendu, tel que défini à la revendication 6.

Les avantages énoncés pour le procédé d'accès selon le premier aspect sont transposables directement au point d'accès.

Selon un troisième aspect, l'invention concerne également un système d'administration selon la revendication 7, comprenant au moins un point d'accès selon la revendication 6 et au moins un dispositif administré par au moins un serveur d'administration connecté à un réseau de communication étendu, ledit dispositif comprenant :
- un module d'administration, agencé pour échanger des données d'administration avec le serveur d'administration;
- un module de détection d'un réseau sans fil dédié à un échange de données d'administration avec le au moins un serveur d'administration ;
- un module de connexion avec le réseau d'administration, en tant que réseau d'administration de secours.

Selon une caractéristique particulière, le dispositif comprend en outre un module de détection d'une panne affectant un accès au réseau de communication étendu et dans lequel le module de connexion est activé sur détection de ladite panne.

Les avantages énoncés pour le procédé d'accès selon le premier aspect sont transposables directement au système.

Selon un quatrième aspect, l'invention concerne un programme pour un point d'accès, comprenant des instructions de code de programme destinées à commander l'exécution de celles des étapes du procédé d'accès précédemment décrit mises en œuvre par le point d'accès, lorsque ce programme est exécuté par ce point d'accès et un support d'enregistrement lisible par un point d'accès sur lequel est enregistré un programme pour un point d'accès.

Les avantages énoncés pour le procédé d'accès selon le premier aspect sont transposables directement au programme pour un point d'accès et au support d'enregistrement.

La technique d'accès à un serveur d'administration sera mieux comprise à l'aide de la description suivante de modes de réalisation particuliers, en référence aux dessins annexés sur lesquels :
- la figure 1 représente un système d'accès dans un réseau de communication dans un mode de réalisation particulier ;
- les figures 2a et 2b illustrent des étapes d'un procédé d'accès mises en œuvre par un point d'accès selon un premier mode particulier de réalisation ;
- les figures 3a et 3b illustrent des étapes d'un procédé d'accès mises en œuvre par un point d'accès selon un deuxième mode particulier de réalisation ;
- la figure 3c illustre des étapes du procédé d'accès mises en œuvre par un dispositif lors du retour au fonctionnement nominal dans le deuxième mode particulier de réalisation ;
- les figures 4a et 4b illustrent des étapes du procédé d'accès mises en œuvre par un dispositif selon le premier mode particulier de réalisation ;
- les figures 5a et 5b illustrent des étapes du procédé d'accès mises en œuvre par un dispositif selon le deuxième mode particulier de réalisation ;
- la figure 6 représente un point d'accès selon un mode particulier de réalisation ;
- la figure 7 représente un dispositif selon un mode particulier de réalisation.

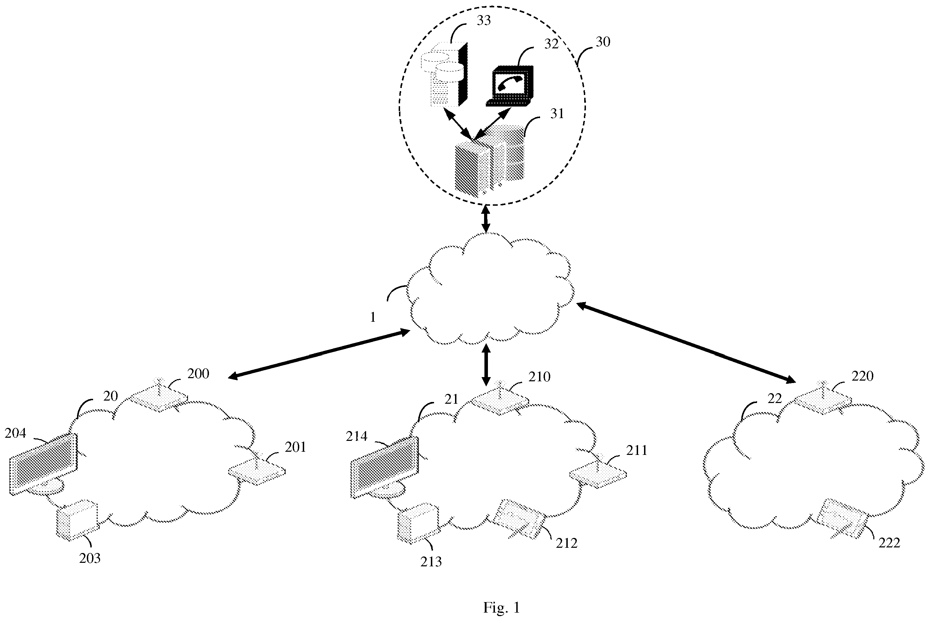

La **figure 1** représente, dans leur environnement, une pluralité de réseaux de communication privé ou local 20, 21, 22 administrés à distance par un système d'administration 30. Dans un réseau local donné, le protocole IP (pour « Internet Protocol ») est utilisé par les dispositifs pour communiquer entre eux dans le réseau local et également pour communiquer avec un réseau de communication étendu ou WAN (pour « Wide Area Network »), tel que le réseau Internet.

Pour l'environnement représenté à la figure 1, on entend par réseau de communication local 20, 21, 22 un réseau de type LAN (« Local Access Network »). Ce réseau peut être en particulier un réseau domestique ou un réseau d'entreprise. Une passerelle d'accès 200 est agencée pour fournir à des dispositifs du réseau local 20 un accès vers le réseau de communication étendu (par exemple Internet) par l'intermédiaire d'un réseau d'accès 1. Le réseau d'accès 1 est par exemple un réseau d'accès xDSL (pour « Digital Subscriber Line », le x indiquant qu'il peut s'agir d'un réseau ADSL, HSDL, VDSL, ...). Il peut également s'agir d'un réseau FTTH (pour « Fiber To The Home »). Aucune limitation n'est attachée au type du réseau d'accès 1. Une passerelle d'accès 210 est agencée pour fournir à des dispositifs du réseau local 21 un accès vers le réseau de communication étendu par l'intermédiaire du réseau d'accès 1 ou bien d'un autre réseau d'accès non représenté. Une passerelle d'accès 220 est agencée pour fournir à des dispositifs du réseau local 22 un accès vers le réseau de communication étendu par l'intermédiaire d'un réseau d'accès 1 ou bien d'un autre réseau d'accès non représenté. Les passerelles d'accès 200, 210, 220 sont des points d'accès au réseau de communication étendu.

Le réseau local 20, 21, 22 peut être aussi bien un réseau filaire de type Ethernet, selon la norme IEEE 802.3, qu'un réseau sans fil de type Wi-Fi, selon la norme IEEE 802.11 ou bien encore un réseau par courant porteur en ligne CPL.

Les dispositifs d'un réseau local 20, 21, 22 peuvent être n'importe quels dispositifs, par exemple domestiques, disposant d'une connexion réseau filaire ou sans-fil. Il peut s'agir par exemple, d'un ordinateur, d'une tablette tactile, d'un téléphone mobile, d'un poste de radio connecté, d'un téléphone fixe, d'un rétroprojecteur, d'une télévision, d'un décodeur TV (« Set-Top Box »), d'une console de jeux, de dispositifs électroménagers, etc. Un décodeur TV 201, une télévision 204 et un ordinateur 203 sont présents dans le réseau local 20. Un décodeur TV 211, une télévision 214, une tablette 212 et un ordinateur 213 sont présents dans le réseau local 21. Une tablette 222 est présente dans le réseau local 22. Certains des dispositifs du réseau local 21, 22 sont également agencés pour communiquer directement avec le réseau de communication étendu Internet par l'intermédiaire d'un autre réseau d'accès, non représenté sur la figure 1, distinct du réseau d'accès 1. Par directement, on comprend que la passerelle d'accès 210, 220 n'intervient pas dans ces échanges, ni le réseau d'accès 1. L'autre réseau d'accès est par exemple un réseau mobile de troisième ou de quatrième génération 3GPP. Les tablettes ou terminaux mobiles 212, 222 disposent ainsi d'un moyen de communication direct avec le réseau de communication Internet. La tablette 212, 222 peut alors jouer un rôle de point d'accès au réseau de communication étendu.

Le système d'administration 30 regroupe une pluralité d'équipements permettant à l'opérateur du réseau de communication d'administrer et de superviser des dispositifs, notamment des dispositifs appartenant à des réseaux locaux, dont la passerelle d'accès. Le système d'administration 30 comprend notamment un serveur d'administration 31, également appelé serveur d'auto-configuration ACS (pour «Auto-Configuration Server »), un centre d'appel 32 et des centres de support 33 opérationnels (OSS, pour « Operational Support System ») ou orientés métiers (BSS, pour « Business Support System »).

Dans le mode de réalisation décrit, le serveur d'administration 31 dialogue avec les dispositifs du réseau local 20, 21, 22 en vue de leur administration selon le protocole de gestion à distance CWMP (« CPE WAN Management Protocol ») défini dans le rapport technique TR-069 élaboré par le Broadband Forum. Aucune limitation n'est attachée à l'utilisation de ce protocole particulier. Dans d'autres modes de réalisation, il est par exemple possible de mettre en œuvre la spécification OMA-Device Management définie par l'organisation OMA (pour « Open Mobile Alliance ») pour l'administration de terminaux mobiles.

Au moyen du protocole CWMP, le serveur d'administration 31 peut notamment :
- obtenir et gérer à distance un état du réseau local 20, 21, 22, des dispositifs qui lui sont connectés ;
- initier des tests de diagnostics ;
- télécharger des fichiers de logiciel ou de microcode et
- gérer des événements.

L'application d'administration à distance utilise le protocole CWMP et s'appuie sur des couches protocolaires TCP/IP, SSL/TLS (pour « Secure Sockets Layer / Transport Layer Security », HTTP (pour « HyperText Transfer Protocol »), SOAP (pour « Simple Object Access Protocol »), RPC (pour « Remote Procédure Call »).

Le rapport technique TR-069 prévoit qu'un dispositif d'un réseau local 20, 21, 22 établit sous certaines conditions une connexion avec le serveur d'administration 31 et une procédure « Inform RPC » est exécutée. Au cours de cette procédure, le dispositif du réseau local 20, 21, 22 transmet différentes données d'administration le concernant. Les données d'administration reçues lors de cette procédure « Inform RPC » sont mémorisées dans une base de données (non représentée sur la figure 1) et permettent ensuite au serveur d'administration 31 de réaliser différentes tâches d'administration du dispositif. Les données d'administration comprennent en particulier une ou plusieurs données d'aide à un diagnostic. A titre d'exemple illustratif, la donnée LastConnectionError permet de fournir la cause de la dernière erreur de connexion dans une procédure « Inform RPC ». Toujours à titre d'exemple illustratif, les données ou objets IPPingDiagnostics, WANDSLDiagnostics ou WANATMF5LoopbackDiagnostics permettent de fournir des informations de diagnostic plus détaillées dans une procédure « Inform RPC ». Ces différentes données sont définies plus précisément dans le rapport TR-069. En mode nominal, l'échange avec le serveur d'administration s'effectue par l'intermédiaire du réseau de communication étendu, c'est-à-dire par l'intermédiaire de la passerelle d'accès pour les dispositifs du réseau local.

La technique d'accès s'appuie sur l'activation d'un réseau sans fil, dit réseau d'administration de secours, dédié à un échange de données d'administration avec le serveur d'administration 31 connecté au réseau de communication étendu. Cet échange est mis en place lors de l'apparition d'une panne affectant un accès au réseau de communication étendu. En dehors de telles pannes, les données d'administration sont acheminées de manière nominale. Le réseau sans fil d'administration de secours est par la suite un réseau sans fil Wi-Fi et est notamment caractérisé par un identifiant propre à l'opérateur du réseau, et une clé de sécurisation du réseau, par exemple une clé WEP (pour « Wired Equivalent Privacy ») ou WPA (pour « Wi-Fi Protected Access »). Un mécanisme de filtrage des données à destination du ou des serveurs d'administration est mis en œuvre, afin d'accepter uniquement des données concernant l'administration et le diagnostic des dispositifs.

Dans un mode de réalisation particulier, le réseau d'administration est caché, c'est-à-dire que l'identifiant de réseau n'est pas diffusé. Il est connu des dispositifs administrés par l'opérateur du réseau.

Un mécanisme d'acceptation et de rejet des demandes de connexion sur le réseau d'administration est mis en œuvre au niveau des points d'accès, afin de n'accepter que les demandes de connexion des dispositifs administrés par l'opérateur du réseau.

Dans un mode de réalisation particulier, une phase d'authentification peut être mise en œuvre afin de prouver que le dispositif est autorisé à se connecter au réseau d'administration.

Il est ici rappelé que le réseau d'administration ne sert qu'en cas de perte de connexion au réseau de communication étendu du réseau local. En temps normal, aucun trafic n'est acheminé sur ce réseau d'administration. Les échanges entre le serveur d'administration et le dispositif du réseau local s'effectuent alors par l'intermédiaire de la passerelle d'accès du réseau local, c'est-à-dire par son accès nominal.

Les points d'accès mettant en œuvre la technique d'accès sont notamment agencés pour activer le réseau sans fil d'administration de secours. Deux modes d'activation de ce réseau d'administration sont prévus pour la mise en œuvre du procédé :
- un mode principal, dans lequel le point d'accès active le réseau d'administration et permet un accès direct au réseau de communication étendu pour des données d'administration ;
- un mode répéteur, dans lequel le point d'accès réémet, ou répète, des données reçues sur le réseau d'administration de secours. Ce mode répéteur permet notamment d'étendre une portée de couverture radio.

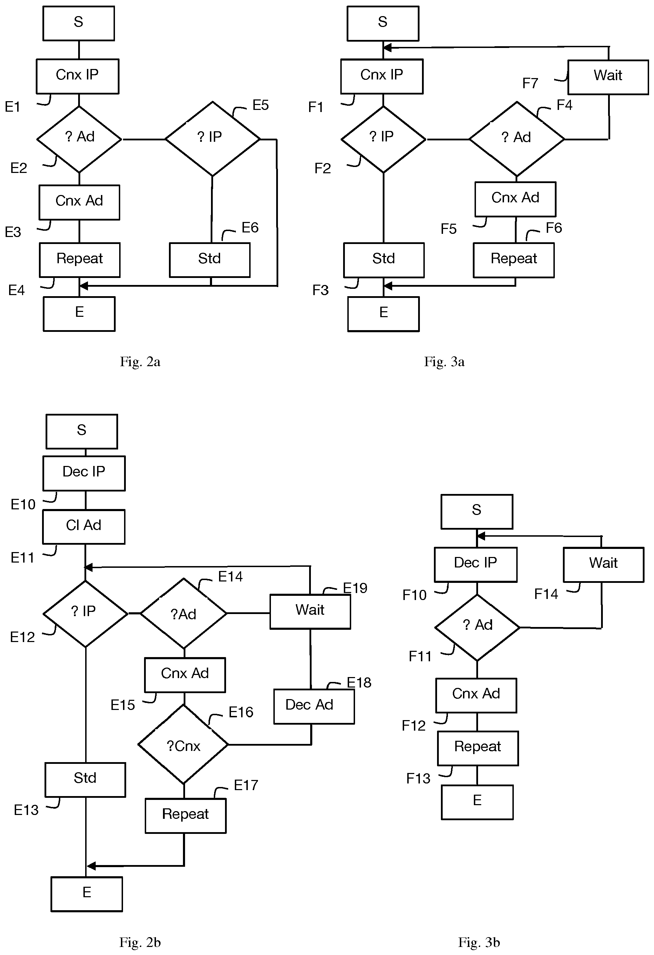

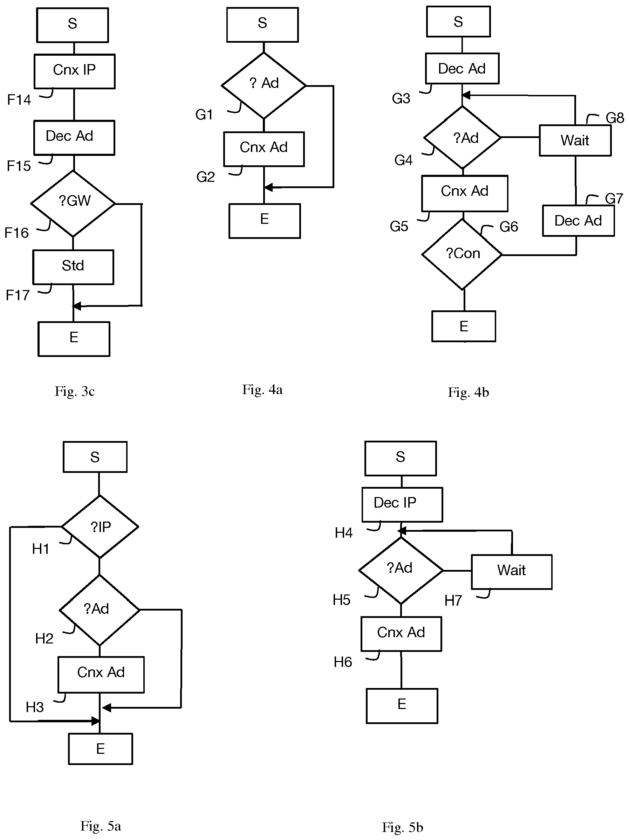

Nous allons maintenant décrire la technique d'administration dans un premier mode particulier de réalisation, telle qu'elle est mise en œuvre par les points d'accès d'un opérateur de réseau, en relation avec les figures 2a et 2b, et par un dispositif administré par cet opérateur, en relation avec les figures 4a et 4b. Dans ce premier mode de réalisation, les points d'accès activent le réseau sans fil d'administration en mode principal ou en mode répéteur. Un seul point d'accès permet l'accès au réseau de communication étendu pour l'échange de données d'administration avec le serveur d'administration pour une pluralité de points d'accès. Ce point d'accès est le point d'accès principal. Les autres points d'accès activent le réseau sans fil d'administration en mode répéteur. Dans une zone desservie par ces différents points d'accès, il est possible à un dispositif d'accéder au réseau d'administration de secours et de communiquer avec le serveur d'administration pour échanger des données d'administration.

La **figure 2a** illustre des étapes du procédé d'accès mises en œuvre par un point d'accès lors de son initialisation. On rappelle ici que ce point d'accès peut être une passerelle d'accès ou bien un dispositif offrant un accès au réseau de communication étendu.

Lors de son initialisation, dans une étape E1, le point d'accès se connecte au réseau de communication étendu.

Dans une étape E2, le point d'accès vérifie s'il détecte le réseau sans fil d'administration. Cette détection s'effectue au moyen d'une recherche de réseaux sans fil disponibles et une identification du réseau d'administration parmi les réseaux sans fil disponibles.

Lorsqu'à l'étape E2, le réseau sans fil d'administration est détecté, un autre point d'accès jouant déjà le rôle du point d'accès principal, le point d'accès se connecte dans une étape E3 au réseau d'administration.

Dans une étape E4, le point d'accès active le réseau sans fil d'administration en mode répéteur. Ainsi, tous les dispositifs qui reçoivent ce réseau d'administration peuvent échanger des données d'administration avec un serveur d'administration au moyen du réseau d'administration répété localement et par un accès offert par le point d'accès principal.

Lorsqu'à l'étape E2, le réseau sans fil d'administration n'est pas détecté, le point d'accès vérifie dans une étape E5 si son accès au réseau de communication étendu est en état de fonctionnement. Si tel est le cas, dans une étape E6, le point d'accès active le réseau d'administration en mode principal et joue le rôle du point d'accès principal. C'est par son intermédiaire que des dispositifs de son réseau local, d'autres réseaux locaux et également de dispositifs administrés par l'opérateur de réseau vont pouvoir accéder au serveur d'administration.

Lorsque son accès au réseau de communication étendu n'est pas en état de fonctionnement, le point d'accès met de nouveau en œuvre l'étape E2 en attente de détection du réseau d'administration.

A l'issue de ces étapes d'initialisation, le point d'accès a ouvert le réseau d'administration en mode principal ou bien en mode répéteur. Tout dispositif dans sa zone de couverture radio peut accéder au serveur d'administration.

La **figure 2b** illustre des étapes du procédé d'accès mises en œuvre par le point d'accès lors d'une perte du réseau d'administration (alors qu'il est en mode répéteur) ou lors d'une perte de connexion au réseau de communication étendu.

Ces pertes sont détectées dans une étape E10. La perte du réseau d'administration correspond à une absence de détection radio du réseau d'administration. La perte de connexion au réseau de communication étendu correspond par exemple à une désynchronisation DSL à cause de bruits impulsifs sur le lien du réseau d'accès, un problème DHCP (« Dynamic Host Configuration Protocol »), une panne matérielle au niveau de l'interface vers le réseau d'accès 1. Aucune limitation n'est attachée au type de panne. Cette panne affecte l'accès au réseau de communication étendu et rend impossible tout accès à ce réseau : elle empêche les échanges de données, notamment d'administration, avec le serveur d'administration 31.

Dans une étape E11, lorsque le point d'accès a activé le réseau d'administration en mode répéteur, le point d'accès désactive le réseau d'administration.

Dans une étape E12, le point d'accès vérifie si son accès au réseau de communication étendu est en état de fonctionnement ou bien si une panne affecte cet accès.

Lorsque l'accès au réseau de communication étendu est en état de fonctionnement, dans une étape E13, le point d'accès active le réseau d'administration en mode principal et joue le rôle du point d'accès principal.

Lorsque l'accès au réseau de communication étendu n'est pas en état de fonctionnement, dans une étape E14, le point d'accès vérifie s'il détecte le réseau d'administration. Lorsque le réseau d'administration est détecté, le point d'accès se connecte dans une étape E15 au réseau d'administration. Dans une étape E16, le point d'accès vérifie qu'il accède bien au réseau de communication étendu et dans ce cas, active dans une étape E17 le réseau d'administration en mode répéteur. Lorsqu'à l'étape E16, le point d'accès détecte qu'il n'accède pas au réseau de communication étendu, dans une étape E18, le point d'accès se déconnecte du réseau d'administration. Dans une étape E19, le point d'accès déclenche une temporisation d'attente, avant de mettre de nouveau en œuvre l'étape E12. Cette temporisation d'attente est par exemple de l'ordre d'une heure.

Lorsqu'à l'étape E14, le point d'accès ne détecte pas le réseau d'administration, le point d'accès met alors en œuvre l'étape E19, décrite précédemment.

La **figure 4a** illustre des étapes du procédé d'accès mises en œuvre par un dispositif administré par l'opérateur de réseau, plus précisément par le serveur d'administration, dans une phase d'initialisation.

Dans une étape G1, le dispositif vérifie s'il détecte le réseau d'administration. Si tel est le cas, dans une étape G2, le dispositif se connecte au réseau d'administration. Dans le cas contraire, le dispositif peut mettre en œuvre de nouveau l'étape G1 à l'expiration d'une temporisation d'attente par exemple de l'ordre d'une heure.

La **figure 4b** illustre des étapes mises en œuvre par un dispositif administré par le serveur d'administration lorsqu'une déconnexion du réseau d'administration a été détectée (étape G3).

Dans une étape G4, le dispositif vérifie s'il détecte le réseau d'administration. Ce réseau d'administration est par exemple activé par un autre point d'accès. Si tel est le cas, dans une étape G5, le dispositif se connecte au réseau d'administration. Dans une étape G6, le dispositif vérifie s'il accède au réseau de communication étendu au moyen du réseau d'administration. Si tel est le cas, le réseau d'administration est en état de fonctionnement. Si tel n'est pas le cas, dans une étape G7, le dispositif se déconnecte du réseau d'administration. Dans une étape G8, le dispositif déclenche une temporisation d'attente, avant de mettre de nouveau en œuvre l'étape G4. Cette temporisation d'attente est par exemple de l'ordre d'une heure.

Lorsqu'à l'étape G4, le dispositif ne détecte pas le réseau d'administration, le dispositif met alors en œuvre l'étape G8, décrite précédemment.

Dans ce premier mode de réalisation, le réseau d'administration est toujours opérationnel et les dispositifs y sont connectés en permanence. Les points d'accès forment ce réseau d'administration et permettent à tout moment d'être connectés au point d'accès principal.

Pour l'environnement représenté à la figure 1, la passerelle d'accès 200 du réseau local 20 joue le rôle de point d'accès principal, c'est-à-dire de tête de réseau d'administration de secours. La passerelle d'accès 210 établit une connexion avec la passerelle d'accès 200 et active ensuite le réseau d'administration en mode répéteur. Les dispositifs du réseau local 21 peuvent accéder au réseau d'administration de secours soit directement s'ils reçoivent le signal radio de la passerelle d'accès 200, soit indirectement par l'intermédiaire de la passerelle d'accès 210. La passerelle d'accès 220 reçoit le réseau d'administration répété par la passerelle d'accès 210 et établit une connexion avec la passerelle d'accès 210. La passerelle d'accès 220 active ensuite le réseau d'administration en mode répéteur. Les dispositifs du réseau local 22 peuvent accéder au serveur d'administration soit par l'intermédiaire des passerelles d'accès 210 et 200, soit par l'intermédiaire des passerelles d'accès 220, 210 et 200.

Lorsque les passerelles d'accès 210, 220 rencontrent une panne affectant leur accès au réseau de communication étendu, il est alors possible d'administrer les dispositifs 210, 211 du réseau local 21 et ceux 220 du réseau local 22 grâce au réseau d'administration de secours.

Nous allons maintenant décrire la technique d'accès dans un deuxième mode particulier de réalisation, telle qu'elle est mise en œuvre par les points d'accès, en relation avec les figures 3a et 3b, et par un dispositif du réseau local, en relation avec les figures 5a et 5b. Dans ce deuxième mode de réalisation, un point d'accès active le réseau sans fil d'administration de secours en mode principal. Lorsqu'une panne affectant son accès au réseau de communication étendu survient, le point d'accès concerné active le réseau d'administration de secours en mode répéteur.

La **figure 3a** illustre des étapes du procédé d'accès mises en œuvre par un point d'accès lors de son initialisation. On rappelle ici que ce point d'accès peut être une passerelle d'accès ou bien un dispositif du réseau local offrant un accès au réseau de communication étendu indépendant.

Lors de son initialisation, dans une étape F1, le point d'accès se connecte au réseau de communication étendu.

Dans une étape F2, le point d'accès vérifie si l'accès au réseau de communication étendu est en état de fonctionnement.

Lorsqu'à l'étape F2, le réseau de communication étendu est en état de fonctionnement, dans une étape F3, le point d'accès active le réseau sans fil en mode principal. Ceci termine la phase d'initialisation.

Lorsqu'à l'étape F2, le réseau de communication étendu n'est pas en état de fonctionnement, dans une étape F4, le point d'accès vérifie s'il détecte le réseau sans fil d'administration.

Lorsqu'à l'étape F4, le réseau sans fil d'administration est détecté, un autre point d'accès jouant déjà le rôle du point d'accès principal, le point d'accès se connecte dans une étape F5 au réseau d'administration. Dans une étape F6, le point d'accès active le réseau sans fil d'administration en mode répéteur. Ainsi, tous les dispositifs qui reçoivent ce réseau d'administration peuvent échanger des données avec un serveur d'administration au moyen du réseau d'administration répété localement et par l'intermédiaire du point d'accès principal.

Lorsqu'à l'étape F4, le réseau sans fil d'administration n'est pas détecté, dans une étape F7, le point d'accès déclenche une temporisation d'attente et à l'expiration de celle-ci, met de nouveau en œuvre l'étape F1 pour établir une connexion avec le réseau de communication étendu. Cette temporisation d'attente est par exemple de l'ordre d'une heure.

A l'issue de ces étapes d'initialisation, le point d'accès a ouvert le réseau d'administration en mode principal s'il a un accès vers le réseau de communication étendu ou bien en mode répéteur si une panne affecte son accès à ce réseau. Tout dispositif dans sa zone de couverture radio peut accéder au serveur d'administration.

La **figure 3b** illustre des étapes du procédé d'accès mises en œuvre par le point d'accès lors d'une perte de connexion au réseau de communication étendu.

Cette perte est détectée dans une étape F10. Des exemples de pertes de connexion ont été précédemment décrits en relation avec l'étape E10 du premier mode de réalisation.

Dans une étape F11, le point d'accès vérifie s'il détecte le réseau d'administration. Lorsque le réseau d'administration est détecté, le point d'accès se connecte dans une étape F12 au réseau d'administration. Dans une étape F13, le point d'accès active le réseau d'administration en mode répéteur.

Lorsque le réseau d'administration n'est pas détecté, dans une étape F14, le point d'accès déclenche une temporisation d'attente, avant de mettre de nouveau en œuvre l'étape F10 afin de vérifier si la panne affecte toujours l'accès au réseau de communication étendu. Cette temporisation d'attente est par exemple de l'ordre d'une heure.

La **figure 5a** illustre des étapes du procédé d'accès mises en œuvre par un dispositif administré par le serveur d'administration et n'offrant pas de fonction de point d'accès dans une phase d'initialisation.

Dans une étape H1, le dispositif vérifie s'il a un accès au réseau de communication étendu.

S'il n'a pas accès au réseau de communication étendu, une panne affectant cet accès, dans une étape H2, le dispositif vérifie s'il détecte le réseau d'administration de secours. Si tel est le cas, dans une étape H3, le dispositif se connecte au réseau d'administration de secours. Dans le cas contraire, le dispositif peut mettre en œuvre de nouveau l'étape H1 à l'expiration d'une temporisation d'attente par exemple de l'ordre d'une heure.

La **figure 5b** illustre des étapes mises en œuvre par un dispositif administré par le serveur d'administration lorsqu'une déconnexion du réseau de communication étendu a été détectée (étape H4).

Dans une étape H5, le dispositif du réseau local vérifie s'il détecte le réseau d'administration de secours. Ce réseau d'administration est par exemple activé par un autre point d'accès. Si tel est le cas, dans une étape H6, le dispositif du réseau local se connecte au réseau d'administration.

Lorsqu'à l'étape H5, le dispositif du réseau local ne détecte pas le réseau d'administration, le dispositif déclenche une temporisation d'attente et à l'expiration de cette temporisation d'attente met de nouveau en œuvre l'étape H4, décrite précédemment.

La **figure 3c** illustre le retour à un fonctionnement nominal de la passerelle d'accès ou d'un dispositif suite au rétablissement de l'accès au réseau de communication étendu (étape F14).

Dans une étape F15, le dispositif se déconnecte du réseau d'administration de secours.

Si le dispositif peut mettre en œuvre une fonction de point d'accès au réseau de communication étendu (étape F16), par exemple s'il s'agit de la passerelle d'accès, dans une étape F17, le dispositif active le réseau d'administration en mode principal.

Le fonctionnement nominal est ainsi rétabli.

Dans ce deuxième mode de réalisation, le réseau d'administration est toujours opérationnel et les dispositifs s'y connectent en cas de panne affectant l'accès au réseau de communication étendu. Les points d'accès forment ce réseau d'administration et permettent à tout moment de communiquer avec le serveur d'administration.

Pour l'environnement représenté à la figure 1, en fonctionnement normal, chacune des passerelles d'accès 200, 210 et 220 respectivement des réseaux locaux 20, 21, 22 activent le réseau d'administration de secours en mode principal.

Lorsque la passerelle d'accès 220 rencontre une panne affectant son accès au réseau de communication étendu, elle se connecte au réseau d'administration de secours créé par la passerelle d'accès 210 et active le réseau d'administration en mode répéteur. La passerelle d'accès 210 est alors le point d'accès principal du réseau d'administration, c'est-à-dire la tête de ce réseau. Il est alors possible d'administrer les dispositifs 220, 222 du réseau local 22 grâce au réseau d'administration de secours.

Lorsque la passerelle d'accès 210 rencontre à son tour une panne affectant son accès au réseau de communication étendu, elle se connecte au réseau d'administration de secours créé par la passerelle d'accès 200 et active le réseau d'administration en mode répéteur. La passerelle d'accès 200 est alors le point d'accès principal du réseau d'administration, c'est-à-dire la tête de ce réseau. Il est alors possible d'administrer les dispositifs 210, 211 du réseau local 21 et les dispositifs 220, 222 du réseau local 22 grâce au réseau d'administration de secours.

A partir des données d'administration du dispositif transmises pendant la panne, le serveur d'administration 31 peut alors déclencher des actions visant au rétablissement de l'accès au réseau de communication étendu. Le serveur d'administration 31 peut également déterminer qu'un problème se situe dans le réseau d'accès lui-même lorsqu'une pluralité de passerelles d'accès détecte une panne identique et peut déclencher des actions correctives afin de rétablir l'accès.

Il est ici souligné que le réseau d'administration de secours est uniquement utilisé pour administrer à distance les dispositifs lors d'une panne affectant l'accès au réseau de communication étendu. Il ne s'agit pas de remplacer l'accès offert par le point d'accès, qui n'est plus opérationnel, par celui du point d'accès principal, en état de fonctionnement. Seul le trafic associé au service d'administration et à la panne est acheminé par l'accès du point d'accès principal. Le volume des données est ainsi limité en comparaison du volume de l'ensemble du trafic généré par les dispositifs d'un réseau local.

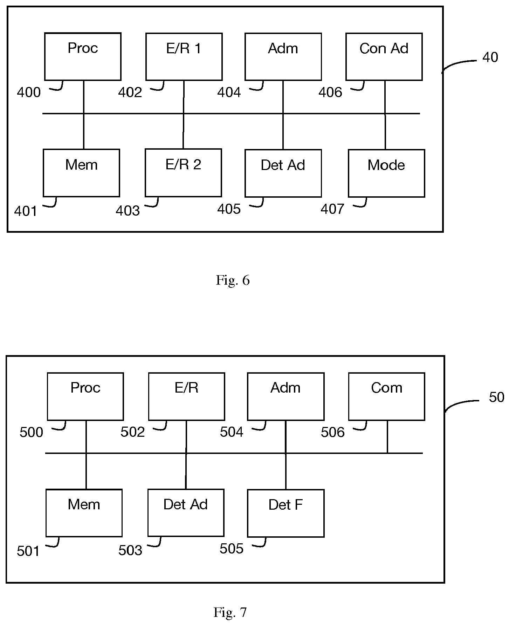

Nous allons maintenant décrire un point d'accès 40 à un réseau de communication étendu dans un mode particulier de réalisation en référence à la **figure 6**. Un tel point d'accès correspond à une passerelle 200, 210, 220, à un terminal mobile offrant une fonction de point d'accès. Le point d'accès est agencé pour être administré à distance par un serveur d'administration 31 et comprend notamment :
- une zone mémoire 401, agencée pour mémoriser une application qui comprend des instructions de code pour mettre en œuvre les étapes du procédé d'accès, tel que décrit précédemment ;
- une mémoire de stockage, non représentée, agencée pour stocker des données utilisées lors de la mise en œuvre du procédé d'accès, tel que décrit précédemment :
- un processeur 400 pour exécuter des instructions de code de modules logiciels ;
- un module d'interface 402 avec un réseau d'accès 1, agencé pour émettre et recevoir des données ;
- un module d'interface 403 sans fil, agencé pour envoyer et recevoir des données au moyen d'un canal de communication radio ;
- un module d'administration 404, agencé pour échanger des données d'administration avec au moins un serveur d'administration 31 connecté au réseau de communication étendu ;
- un module de détection 405 d'un réseau sans fil dédié à un échange de données d'administration avec le serveur d'administration ;
- un module de connexion 406 au réseau sans fil d'administration lorsque ledit réseau est détecté ;
- un module de commande d'activation 407 dudit réseau sans fil d'administration, agencé pour activer le réseau en tant que répéteur (mode répéteur) ou en tant qu'accès au serveur d'administration (mode principal).

Il est ici souligné que le point d'accès 40 comprend également d'autres modules de traitement, non représentés sur la figure 6, agencés pour mettre en œuvre les différentes fonctions de point d'accès.

Le module d'administration 404 met par exemple en œuvre les fonctions d'administration définies dans le rapport technique TR-069.

Le module d'interface 402 est par exemple un module xDSL. Il peut également s'agir d'un module d'accès à un réseau de communication mobile.

Le module d'interface 403 est par exemple un module Wi-Fi.

Dans un mode de réalisation particulier, le module de commande d'activation 407 active le réseau d'administration dans le mode répéteur lorsque le réseau d'administration est détecté et dans le mode principal dans le cas contraire.

Dans un mode de réalisation particulier, le point d'accès 40 comprend également un module de détection d'une panne, non représenté sur la figure 6, agencé pour détecter une panne affectant l'accès du point d'accès au réseau de communication étendu par l'intermédiaire du module d'interface 402. Dans ce mode de réalisation particulier, le module de commande 407 active par défaut le réseau d'administration en mode principal et lorsqu'une panne est détectée par le module de détection, active le réseau d'administration en mode répéteur.

Nous allons maintenant décrire un dispositif 50 administré par un serveur d'administration connecté à un réseau de communication étendu dans un mode particulier de réalisation en référence à la **figure 7**. Un tel dispositif comprend notamment :
- une zone mémoire 501, agencée pour mémoriser une application qui comprend des instructions de code pour mettre en œuvre les étapes du procédé d'accès, tel que décrit précédemment ;
- une mémoire de stockage, non représentée, agencée pour stocker des données utilisées lors de la mise en œuvre du procédé d'accès, tel que décrit précédemment :
- un processeur 500 pour exécuter des instructions de code de modules logiciels ;
- un module d'interface 502, agencé pour envoyer et recevoir des données au moyen d'un canal de communication radio ;
- un module de détection 503 d'un réseau sans fil dédié à un échange de données d'administration avec le au moins un serveur d'administration ;
- un module d'administration 504, agencé pour échanger des données d'administration avec le serveur d'administration ;
- un module de détection 505 d'une panne affectant un accès au réseau de communication étendu ;
- un module de commande 506, agencé pour établir une connexion avec le réseau d'administration, en tant que réseau d'administration de secours.

Il est ici souligné que le dispositif 50 comprend également d'autres modules de traitement, non représentés sur la figure 7, agencés pour mettre en œuvre les différentes fonctions de ce dispositif.

Le module d'administration 504 met par exemple en œuvre les fonctions d'administration définies dans le rapport technique TR-069.

Le module d'interface 502 est par exemple un module Wi-Fi.

Le module de commande 506 est en outre agencé pour commander au module d'administration 504 d'échanger des données d'administration avec le serveur d'administration par l'intermédiaire du réseau d'administration de secours, lorsqu'une panne est détectée par le module de détection 505.

Dans un mode de réalisation particulier, le module de connexion 506 est activé sur détection d'une panne par le module de détection 505.

La technique d'administration est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 404, 405, 406, 407 sont agencés pour mettre en œuvre le procédé d'accès précédemment décrit. Il s'agit de préférence de modules logiciels comprenant des instructions logicielles pour faire exécuter celles des étapes du procédé d'accès précédemment décrit, mises en œuvre par un point d'accès. L'invention concerne donc aussi :
- un programme pour un point d'accès, comprenant des instructions de code de programme destinées à commander l'exécution des étapes du procédé d'accès précédemment décrit, lorsque ledit programme est exécuté par ce point d'accès ;
- un support d'enregistrement lisible par un point d'accès sur lequel est enregistré le programme pour un point d'accès.

Dans un mode de réalisation particulier, les modules 503, 504, 505, 506 sont agencés pour mettre en œuvre le procédé d'accès précédemment décrit. Il s'agit de préférence de modules logiciels comprenant des instructions logicielles pour faire exécuter celles des étapes du procédé d'accès précédemment décrit, mises en œuvre par un dispositif. L'invention concerne donc aussi :
- un programme pour un dispositif, comprenant des instructions de code de programme destinées à commander l'exécution des étapes du procédé d'accès précédemment décrit, lorsque ledit programme est exécuté par ledit dispositif ;
- un support d'enregistrement lisible par un dispositif sur lequel est enregistré le programme pour un dispositif.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système d'accès à au moins un serveur d'administration, comprenant au moins un point d'accès 40, 200, 210, 220, 212, 222 et au moins un dispositif 50, 201, 211 tels que décrits précédemment.

## Revendications

1. Procédé d'accès à au moins un serveur d'administration (31) connecté à un réseau de communication étendu, **caractérisé en ce qu'**il comprend :
- vérification d'une détection (E2, E14, F4, F10), par un point d'accès (200, 210, 220, 212, 222) permettant un accès au réseau de communication étendu, d'un réseau sans fil dédié à un échange de données d'administration avec le au moins un serveur d'administration, dit réseau sans fil d'administration ;
- lorsque le réseau sans fil d'administration est détecté, connexion (E3, E16, F5, F12) par le point d'accès audit réseau sans fil et activation (E4, F6) par le point d'accès dudit réseau sans fil en mode répéteur, dans lequel le point d'accès répète des données reçues sur ledit réseau sans fil
- lorsque le réseau sans fil d'administration n'est pas détecté et en l'absence de panne affectant un accès au réseau de communication étendu, une activation (E6) par le point d'accès du réseau sans fil d'administration permettant un accès direct audit serveur d'administration.

2. Procédé d'accès selon la revendication 1, comprenant en outre :
- détection (E10) d'une déconnexion du réseau sans fil d'administration ;
- en l'absence de panne affectant un accès au réseau de communication étendu, activation (E13) par le point d'accès du réseau sans fil d'administration permettant un accès direct audit serveur d'administration.

3. Procédé d'accès selon l'une quelconque des revendications 1 à 2, dans lequel un dispositif administré par le serveur d'administration se connecte (G2, G5) au réseau sans fil d'administration lorsqu'il le détecte (G1, G4).

4. Procédé d'accès selon la revendication 1, dans lequel une recherche du réseau sans fil d'administration est déclenchée suite à une détection d'une panne (F2, F10) affectant l'accès au réseau de communication étendu.

5. Procédé d'accès selon la revendication 4, dans lequel un dispositif administré par l'opérateur de réseau se connecte (H6) au réseau sans fil d'administration lorsqu'il détecte (H5) une absence d'accès au réseau de communication étendu.

6. Point d'accès (40) à un réseau de communication étendu, **caractérisé en ce qu'**il comprend :
- un module de détection (405) d'un réseau sans fil dédié à un échange de données d'administration avec au moins un serveur d'administration connecté au réseau de communication étendu ;
- un module de connexion (406) audit réseau sans fil lorsque ledit réseau est détecté ;
- un module d'activation (403) dudit réseau sans fil, agencé pour activer le réseau sans fil d'administration en mode répéteur, dans lequel le point d'accès répète des données reçues sur ledit réseau sans fil, lorsque ledit réseau est détecté et pour activer le réseau sans fil d'administration permettant un accès direct audit serveur d'administration, lorsque ledit réseau n'est pas détecté et en l'absence de panne affectant un accès au réseau de communication étendu.

7. Système d'administration, **caractérisé en ce qu'**il comprend au moins un point d'accès selon la revendication 6 et au moins un dispositif administré par au moins un serveur d'administration connecté à un réseau de communication étendu, ledit dispositif comprenant :
- un module d'administration (504), agencé pour échanger des données d'administration avec le serveur d'administration (31) ;
- un module de détection (503) d'un réseau sans fil dédié à un échange de données d'administration avec le au moins un serveur d'administration ;
- un module de connexion (506) avec le réseau d'administration, en tant que réseau d'administration de secours.

8. Système d'administration selon la revendication 7, dans lequel le dispositif comprend en outre un module de détection (505) d'une panne affectant un accès au réseau de communication étendu et dans lequel le module de connexion est activé sur détection de ladite panne.

9. Programme pour un point d'accès, comprenant des instructions de code de programme destinées à commander l'exécution de celles des étapes du procédé d'accès selon l'une des revendications 1 à 5 mises en œuvre par le point d'accès, lorsque ledit programme est exécuté par ledit point d'accès.

10. Support d'enregistrement lisible par un point d'accès sur lequel est enregistré le programme selon la revendication 9.

## Patentansprüche

1. Verfahren zum Zugang zu mindestens einem Verwaltungsserver (31), der mit einem Weitverkehrs-Kommunikationsnetzwerk verbunden ist, **dadurch gekennzeichnet, dass** es Folgendes umfasst:
- Überprüfen einer Detektion (E2, E14, F4, F10), durch einen Zugangspunkt (200, 210, 220, 212, 222), der einen Zugang zu einem Weitverkehrs-Kommunikationsnetzwerk gestattet, eines drahtlosen Netzwerks, das für einen Verwaltungsdatenaustausch mit dem mindestens einen Verwaltungsserver vorgesehen ist, das als drahtloses Verwaltungsnetzwerk bezeichnet wird;
- wenn das drahtlose Verwaltungsnetzwerk detektiert ist, Verbinden (E3, E16, F5, F12), durch den Zugangspunkt, mit dem drahtlosen Netzwerk, und Aktivieren (E4, F6), durch den Zugangspunkt, des drahtlosen Netzwerks im Repeater-Modus, wobei der Zugangspunkt empfangene Daten in dem drahtlosen Netzwerk wiederholt
- wenn das drahtlose Verwaltungsnetzwerk nicht detektiert ist und bei Nichtvorliegen einer Störung, die einen Zugang zum Weitverkehrs-Kommunikationsnetzwerk beeinflusst, ein Aktivieren (E6), durch den Zugangspunkt, des drahtlosen Verwaltungsnetzwerks, wobei ein direkter Zugang zum Verwaltungsserver gestattet wird.

2. Zugangsverfahren nach Anspruch 1, ferner umfassend:
- Detektieren (E10) einer Trennung von dem drahtlosen Verwaltungsnetzwerk ;
- bei Nichtvorliegen einer Störung, die einen Zugang zum Weitverkehrs-Kommunikationsnetzwerk beeinflusst, Aktivieren (E13), durch den Zugangspunkt des drahtlosen Verwaltungsnetzwerks, wobei ein direkter Zugang zum Verwaltungsserver gestattet wird.

3. Zugangsverfahren nach einem der Ansprüche 1 bis 2, wobei sich eine Vorrichtung, die durch den Verwaltungsserver verwaltet wird, mit dem drahtlosen Verwaltungsnetzwerk verbindet (G2, G5), wenn sie es detektiert (G1, G4).

4. Zugangsverfahren nach Anspruch 1, wobei eine Suche des drahtlosen Verwaltungsnetzwerks nach einer Detektion einer Störung (F2, F10) ausgelöst wird, die den Zugang zum Weitverkehrs-Kommunikationsnetzwerk beeinflusst.

5. Zugangsverfahren nach Anspruch 4, wobei sich eine Vorrichtung, die durch den Netzwerkbetreiber verwaltet wird, mit dem drahtlosen Verwaltungsnetzwerk verbindet (H6), wenn sie ein Nichtvorhandensein von Zugang zum Weitverkehrs-Kommunikationsnetzwerk detektiert (H5).

6. Zugangspunkt (40) zu einem Weitverkehrs-Kommunikationsnetzwerk, **dadurch gekennzeichnet, dass** er Folgendes umfasst:
- ein Modul zum Detektieren (405) eines drahtlosen Netzwerks, das für einen Verwaltungsdatenaustausch mit mindestens einem Verwaltungsserver vorgesehen ist, der mit dem Weitverkehrs-Kommunikationsnetzwerk verbunden ist;
- ein Modul zum Verbinden (406) mit dem drahtlosen Netzwerk, wenn das Netzwerk detektiert ist;
- ein Modul zum Aktivieren (403) des drahtlosen Netzwerks, das angeordnet ist, das drahtlose Verwaltungsnetzwerk im Repeater-Modus zu aktivieren, wobei der Zugangspunkt Daten wiederholt, die in dem drahtlosen Netzwerk empfangen werden, wenn das Netzwerk detektiert ist, und das drahtlose Verwaltungsnetzwerk zu aktivieren, wobei ein direkter Zugang zum Verwaltungsserver gestattet wird, wenn das Netzwerk nicht detektiert ist und bei Nichtvorliegen einer Störung, die einen Zugang zum Weitverkehrs-Kommunikationsnetzwerk beeinflusst.

7. Verwaltungssystem, **dadurch gekennzeichnet, dass** es mindestens einen Zugangspunkt nach Anspruch 6 und mindestens eine Vorrichtung, die durch mindestens einen Verwaltungsserver, der mit einem Weitverkehrs-Kommunikationsnetzwerk verbunden ist, verwaltet wird, umfasst, die Vorrichtung umfassend:
- ein Verwaltungsmodul (504), das angeordnet ist, Verwaltungsdaten mit dem Verwaltungsserver (31) auszutauschen;
- ein Modul zum Detektieren (503) eines drahtlosen Netzwerks, das für einen Verwaltungsdatenaustausch mit dem mindestens einen Verwaltungsserver vorgesehen ist;
- ein Modul zum Verbinden (506) mit dem Verwaltungsnetzwerk als Ersatz-Verwaltungsnetzwerk.

8. Verwaltungssystem nach Anspruch 7, wobei die Vorrichtung ferner ein Modul zum Detektieren (505) einer Störung, die einen Zugang zum Weitverkehrs-Kommunikationsnetzwerk beeinflusst, umfasst, und wobei das Verbindungsmodul bei Detektion der Störung aktiviert wird.

9. Programm für einen Zugangspunkt, umfassend Programmcode-Anweisungen, die dazu bestimmt sind, die Ausführung derjenigen der Schritte des Zugangsverfahrens nach einem der Ansprüche 1 bis 5 zu steuern, die durch den Zugangspunkt durchgeführt werden, wenn das Programm durch den Zugangspunkt ausgeführt wird.

10. Durch einen Zugangspunkt lesbares Speichermedium, auf dem das Programm nach Anspruch 9 gespeichert ist.

## Claims

1. Method for accessing at least one administration server (31) connected to a wide area communication network, **characterized in that** comprises:
- the verification of a detection (E2, E14, F4, F10), via an access point (200, 210, 220, 212, 222) allowing access to the wide area communication network, of a wireless network dedicated to an exchange of administration data with the at least one administration server, called a wireless administration network;
- when the wireless administration network is detected, connection (E3, E16, F5, F12) by the access point to said wireless network and activation (E4, F6) by the access point of said wireless network in repeater mode, in which the access point repeats data received on said wireless network,
- if the wireless administration network is not detected and if there is no fault affecting access to the wide area communication network, an activation (E6) by the access point of the wireless administration network, allowing direct access to said administration server.

2. Access method according to Claim 1, further comprising:
- the detection (E10) of a disconnection of the wireless administration network;
- if there is no fault affecting access to the wide area communication network, activation (E13) by the access point of the wireless administration network, allowing direct access to said administration server.

3. Access method according to either of Claims 1 and 2, wherein a device administered by the administration server connects (G2, G5) to the wireless administration network when it detects it (G1, G4).

4. Access method according to Claim 1, wherein a search of the wireless administration network is initiated following a detection of a fault (F2, F10) affecting access to the wide area communication network.

5. Access method according to Claim 4, wherein a device administered by the network operator connects (H6) to the wireless administration network when it detects (H5) an absence of access to the wide area communication network.

6. Access point (40) for accessing a wide area communication network, **characterized in that** it comprises:
- a module (405) for detecting a wireless network dedicated to an exchange of administration data with at least one administration server connected to the wide area communication network;
- a module (406) for connecting to said wireless network when said network is detected;
- a module (403) for activating said wireless network, arranged to activate the wireless administration network in repeater mode, in which the access point repeats data received on said wireless network, when said network is detected and for activating the wireless administration network, allowing direct access to said administration server, if said network is not detected and if there is no fault affecting access to the wide area communication network.

7. Administration system, **characterized in that** it comprises at least one access point according to Claim 6 and at least one device administered by at least one administration server connected to a wide area communication network, said device comprising:
- an administration module (504), arranged to exchange administration data with the administration server (31);
- a module (503) for detecting a wireless network dedicated to an exchange of administration data with the at least one administration server;
- a module (506) for connecting to the administration network, acting as the backup administration network.

8. Administration system according to Claim 7, wherein the device further comprises a module (505) for detecting a fault affecting access to the wide area communication network, wherein the connection module is activated on the detection of said fault.

9. Program for an access point, comprising program code instructions intended to command the execution of those of the steps of the access method according to any of Claims 1 to 5 executed by the access point, when said program is executed by said access point.

10. Recording medium, readable by an access point, on which the program according to Claim 9 is recorded.
